# EUROPÄISCHE PATENTSCHRIFT

(11) **EP 2 275 228 B1**
(45) Veröffentlichungstag und Bekanntmachung des Hinweises auf die Patenterteilung: **01.02.2012**
(21) Anmeldenummer: 10006997.0
(22) Anmeldetag: 07.07.2010
(51) Int. Cl.: B23Q 17/22, B23D 59/00

(54) **Bearbeitungssystem**
Processing system
Système de traitement

(30) Priorität: 08.07.2009 DE 102009032256
(43) Veröffentlichungstag der Anmeldung: 19.01.2011
(73) Patentinhaber: Mafell AG, 78727 Oberndorf a.N. (DE)
(72) Erfinder: Krauss, Matthias, 78737 Fluorn-Winzeln (DE)
(74) Vertreter: Manitz, Finsterwald & Partner GbR

(56) Entgegenhaltungen:
- EP-A1- 0 103 216
- DE-A1-102007 022 785
- US-A1- 2006 174 502

## Beschreibung

Die Erfindung betrifft ein Bearbeitungssystem zur Bearbeitung von Werkstücken, mit einem Handmessgerät zur Ermittlung von für die Werkstückbearbeitung erforderlichen Messwerten zu wenigstens einer Messgröße, und mit einer Bearbeitungsmaschine für die Werkstücke, die eine der Messgröße zugeordnete und entsprechend dem mittels des Handmessgeräts ermittelten Messwert verstellbare Einstelleinrichtung umfasst.

In der Praxis muss sich ein Benutzer, der z.B. auf einer Baustelle einen Raum ausmisst, um Winkel und Längen zuzuschneidender Bretter oder Leisten zu ermitteln, die ermittelten Messwerte entweder merken oder notieren. Dies ist nicht nur umständlich, sondern kann auch zu Fehlern führen.
Solche Bearbeitungssysteme sind z.B. aus dem Dokument EP 0 103 216 A1 bekannt, wobei ein Handmessgerät für den Forst- und Sägewerksbereich offenbart ist, welches eine Messkluppe und ein Maßband zur Vermessung geschlagener Baumstämme umfasst. Das Handmessgerät kann an ein elektronisches Datenerfassungsgerät abgeschlossen werden. Alternativ können auch Messsignale von dem Handmessgerät über eine Telemetriestrecke zu einem entfernten Datenerfassungsgerät übertragen werden.

Aufgabe der Erfindung ist es, ein komfortableres Bearbeitungssystem der eingangs genannten Art zu schaffen.

Die Lösung dieser Aufgabe erfolgt durch die Merkmale des Anspruchs 1. Erfindungsgemäß sind die Messwerte von dem Handmessgerät an die Bearbeitungsmaschine übertragbar und ist die Einstelleinrichtung in Abhängigkeit von den übertragenen Messwerten automatisch verstellbar.

Die Erfindung sorgt für eine erhebliche Entlastung des Benutzers, der sich die Messwerte nicht mehr merken oder notieren muss. Außerdem spart die automatische Einstellung der Bearbeitungsmaschine Zeit. Der Benutzer braucht lediglich mit dem Messgerät den jeweiligen Messwert zu ermitteln und kann dann an der korrekt eingestellten Bearbeitungsmaschine die Werkstückbearbeitung durchführen.

Die erfindungsgemäße automatische Verstellbarkeit der Einstelleinrichtung der Bearbeitungsmaschine schließt nicht aus, d.h. es ist auch möglich, dass der Einstellvorgang erst vom Benutzer zu initiieren ist. So kann beispielsweise vorgesehen sein, dass die ermittelten Messwerte zunächst am Handmessgerät gespeichert werden und der Benutzer die Übertragung der Messwerte, beispielsweise durch Betätigen einer entsprechenden Taste am Handmessgerät, auslösen muss. Nach der Übertragung kann der automatische Einstellvorgang unmittelbar durchgeführt und dann sofort mit der Werkstückbearbeitung begonnen werden, wobei aber auch hier vorgesehen sein kann, dass die übertragenen Messwerte zunächst an der Bearbeitungsmaschine gespeichert werden und der Benutzer wiederum den Einstellvorgang erst auslösen muss.

Bevorzugte Ausführungsformen der Erfindung sind in den abhängigen Ansprüchen, der Beschreibung sowie der Zeichnung angegeben.

Bei der Messgröße handelt es sich beispielsweise um einen Winkel. Die Bearbeitungsmaschine ist insbesondere eine Maschine zur Holzbearbeitung. Beispielsweise handelt es sich um eine Tischkreissäge.

Bei der Einstelleinrichtung kann es sich beispielsweise um einen Winkelanschlag für ein Werkstück handeln. Es ist auch möglich, als Einstelleinrichtung einen Längenanschlag für ein Werkstück vorzusehen. Ferner kann es sich bei der Einstelleinrichtung um eine Neigungsverstellung für ein Werkzeug der Bearbeitungsmaschine handeln, beispielsweise für das Sägeblatt einer Tischkreissäge.

In einer bevorzugten Ausgestaltung der Erfindung ist das Handmessgerät zur Ermittlung und Übertragung von Messwerten zu wenigstens zwei verschiedenen Messgrößen ausgebildet, wobei die Bearbeitungsmaschine zwei verschiedene Einstelleinrichtungen umfasst, die jeweils einer der Messgrößen zugeordnet sind. Hierdurch ergibt sich für den Benutzer eine besonders vorteilhafte Arbeitsentlastung: Mit einem einzigen Handmessgerät können mehrere Parameter der erforderlichen Werkstückbearbeitung abgedeckt werden, und die Werkstückbearbeitung kann hinsichtlich dieser Parameter an einer einzigen Bearbeitungsmaschine erfolgen, wobei die an der Bearbeitungsmaschine erforderlichen Einstellungen für alle Parameter automatisch in Abhängigkeit von den ermittelten Messwerten erfolgen.

Bei den verschiedenen Messgrößen kann es sich beispielsweise um einen Winkel einerseits und um eine Länge andererseits handeln.

Ein derartiges Konzept ist besonders vorteilhaft z.B. beim Verlegen von Parkett oder Laminat auf Böden oder beim Täfeln von Wänden oder Decken, und zwar insbesondere dann, wenn der betreffende Raum keine exakt rechtwinkligen Eckbereiche aufweist, die individuell ausgemessen werden müssen. Mit einem Winkelmessgerät, beispielsweise einer so genannten Schmiege, die gleichzeitig zur Messung von Längen ausgebildet ist, können dann Winkel und Länge der für den Eckbereich vorgesehenen Werkstücke (Bretter, Leisten etc.) praktisch gleichzeitig bestimmt und an eine entsprechende Bearbeitungsmaschine, insbesondere eine vor Ort vorhandene Tischkreissäge, übertragen werden, die sowohl einen Winkelanschlag als auch einen Längenanschlag aufweist, welche beide automatisch in Abhängigkeit von dem jeweiligen Messwert (Winkel bzw. Länge) verstellt werden können.

Gemäß einem weiteren Ausführungsbeispiel der Erfindung umfasst die Bearbeitungsmaschine eine Mehrzahl von der gleichen Messgröße zugeordneten Einstelleinrichtungen, die in Abhängigkeit von einem übertragenen Messwert in eine gemeinsame Bearbeitungskonfiguration verstellbar sind. Insbesondere umfasst die Bearbeitungskonfiguration eine vorgegebene Relativstellung der Einstelleinrichtungen jeweils zu einem Werkzeug der Bearbeitungsmaschine.

Eine derartige Ausgestaltung des erfindungsgemäßen Bearbeitungssystems ist besonders dann vorteilhaft, wenn an zwei für eine Eckverbindung vorgesehenen Werkstücken Gehrungsschnitte ausgeführt werden müssen. Entsprechend ist gemäß einem Ausführungsbeispiel der Erfindung die Bearbeitungskonfiguration zur Herstellung von Gehrungsschnitten an zwei für eine Eckverbindung vorgesehenen Werkstücken ausgebildet. Eine Tischkreissäge beispielsweise, die zwei bezüglich des Sägeblatts symmetrisch angeordnete Winkelanschläge aufweist, kann folglich in Abhängigkeit von einem einzigen Messwert - nämlich dem Winkel des betreffenden Eckbereichs - so eingestellt werden, dass die beiden auf Gehrung zu schneidenden Werkstücke nacheinander zugeschnitten werden können, ohne dass zwischendurch Einstellungen an den Winkelanschlägen vorgenommen werden müssten.

Ferner kann erfindungsgemäß vorgesehen sein, dass einer Messgröße mehrere Einstelleinrichtungen zugeordnet sind und am Handmessgerät und/oder an der Bearbeitungsmaschine eine Auswahleinrichtung vorgesehen ist, mit der die für einen jeweiligen Messwert zu verstellende Einstelleinrichtung auswählbar ist.

Eine derartige Ausgestaltung ist beispielsweise dann von Vorteil, wenn eine Messgröße - beispielsweise ein Winkel - auf unterschiedliche Art und

Weise bei der Werkstückbearbeitung umsetzbar ist. Ein mittels eines Winkelmessers ermittelbarer Winkel kann z.B. für einen Gehrungsschnitt entweder an einer Flachseite oder an einer Kante des Werkstücks benötigt werden. Im Falle einer Flachseite ist es ein Winkelanschlag, der entsprechend dem gemessenen Winkel relativ zu einem Sägeblatt, z.B. einer Tischkreissäge, eingestellt werden muss. Im Falle einer Kante ist der Neigungswinkel des Sägeblatts entsprechend einzustellen. Eine beispielsweise am Handmessgerät vorgesehene Auswahleinrichtung ermöglicht es dem Benutzer, die jeweils zu verstellende Einstelleinrichtung der Bearbeitungsmaschine, also beispielsweise den Winkelanschlag oder die Neigungsverstellung des Sägeblatts, auszuwählen.

Bei den Messwerten kann es sich jeweils um einen unmittelbar mittels des Handmessgeräts gemessenen Wert und/oder um wenigstens einen aus dem unmittelbar mittels des Handmessgeräts gemessenen Wert abgeleiteten Wert handeln. Beispielsweise kann mit einem Winkelmessgerät der Winkel einer Raumecke ermittelt werden, wobei für die Werkstückbearbeitung entweder genau dieser gemessene Winkel oder z.B. die Winkelhalbierende benötigt werden kann. Je nach Anwendung kann es also notwendig sein, beispielsweise einen Winkelanschlag einer Tischkreissäge nicht auf den gemessenen Winkel, sondern auf die Winkelhalbierende einzustellen, bei der es sich folglich um eine aus dem unmittelbar gemessenen Messwert abgeleiteten Wert handelt. Auch derartige abgeleitete Werte sind Messwerte im Sinne der Erfindung.

Die Übertragung der Messwerte kann drahtlos erfolgen, beispielsweise über eine Funkverbindung oder eine Infrarotverbindung. Alternativ kann aber auch ein Kabel zwischen Handmessgerät und Bearbeitungsmaschine vorgesehen sein.

Ferner kann das Handmessgerät für die Übertragung der Messwerte an die Bearbeitungsmaschine anschließbar sein, wobei für die Messwertübertragung eine Schnittstelle zwischen Bearbeitungsmaschine und Handmessgerät vorgesehen ist. Beispielsweise kann das erfindungsgemäße System so ausgebildet sein, dass der Benutzer das Handmessgerät an die Bearbeitungsmaschine anstecken muss, um eine Messwertübertragung zu ermöglichen. Als Schnittstelle kann beispielsweise eine Stecker-Buchse-Verbindung vorgesehen sein, die gemäß einem bekannten Standard ausgebildet ist.

Des Weiteren ist es erfindungsgemäß möglich, dass die Übertragung der Messwerte mittels eines separaten, sowohl mit dem Handmessgerät als auch mit der Bearbeitungsmaschine lösbar koppelbaren Speicherelements erfolgt, wobei das Speicherelement am Handmessgerät mit den Messwerten beschreibbar und die Messwerte an der Bearbeitungsmaschine aus dem Speicherelement auslesbar sind. Eine derartige Ausgestaltung kann z.B. dann von Vorteil sein, wenn die Bearbeitungsmaschine nicht am Ort der Messwertermittlung zur Verfügung steht und es für die jeweilige Anwendung unproblematisch ist, wenn die Werkstückbearbeitung erst zu einem späteren Zeitpunkt erfolgt.

Zu erwähnen ist noch, dass die Erfindung nicht darauf beschränkt ist, nur jeweils einen einzigen Messwert zu ermitteln und an die Bearbeitungsmaschine zu übertragen. Vielmehr ist es erfindungsgemäß auch möglich, eine Vielzahl von Messwerten zu ermitteln und beispielsweise am Handmessgerät zwischenzuspeichern. Nach Abschluss der Messwertaufnahme können dann alle Messwerte an die Bearbeitungsmaschine übertragen und beispielsweise dort wiederum zwischengespeichert werden. Für die Bearbeitung einer Vielzahl von Werkstücken nacheinander werden die Messwerte dann sukzessive zur entsprechenden Einstellung der jeweiligen Einstelleinrichtung der Bearbeitungsmaschine herangezogen.

Die Erfindung wird im Folgenden beispielhaft unter Bezugnahme auf die Zeichnung beschrieben. Es zeigen:
- Fig. 1: schematisch ein erfindungsgemäßes Bearbeitungssys- tem,
- Fig. 2: eine mögliche Anwendung der Erfindung,
- Fig. 3: den Einsatz eines Handmessgeräts eines erfindungs- gemäßen Bearbeitungssystems, und
- Fig. 4 bis 7: schematisch verschiedene Anwendungen der Erfin- dung.

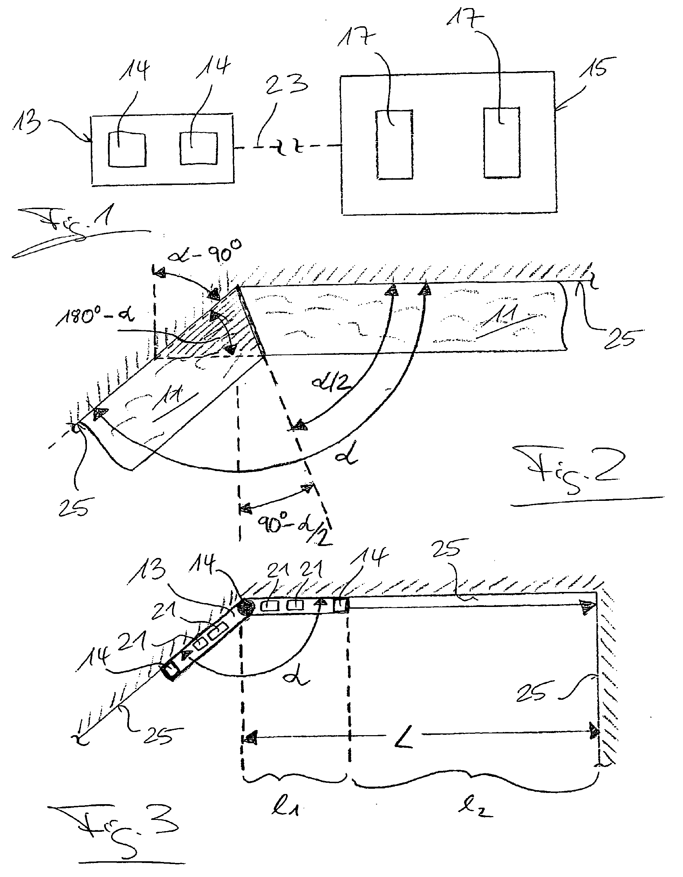

Gemäß Fig. 1 umfasst das erfindungsgemäße Bearbeitungssystem ein Handmessgerät 13 sowie eine Bearbeitungsmaschine 15.

Bei dem Handmessgerät 13 handelt es sich beispielsweise um ein kombiniertes Winkel- und Längenmessgerät, das eine Messeinrichtung 14 zum Bestimmen eines Winkels und eine weitere Messeinrichtung 14 zur Bestimmung einer Länge umfasst.

Die Bearbeitungsmaschine 15 umfasst ein nicht dargestelltes Werkzeug, beispielsweise ein Sägeblatt, sowie zwei Einstelleinrichtungen 17. Jede Einstelleinrichtung 17 ist der Messgröße einer der Messeinrichtungen 14 zugeordnet. So handelt es sich beispielsweise bei der einen Einstelleinrichtung 17 um einen Winkelanschlag, mit dem ein am Werkstück herzustellender Winkelschnitt in Bezug auf das Werkzeug der Bearbeitungsmaschine eingestellt werden kann, während die andere Einstelleinrichtung 17 ein Längenanschlag ist, mit dem eine Solllänge für das Werkstück vorgegeben werden kann.

Die mit dem Handmessgerät 13 ermittelten Messwerte können an die Bearbeitungsmaschine 15 übertragen werden. Hierzu ist eine Übertragungsstrecke 23 vorgesehen. Wie im Einleitungsteil bereits erwähnt, kann es sich bei dieser Übertragungsstrecke 23 um eine Funk- oder Infrarotverbindung handeln. Eine drahtlose Kommunikation zwischen Handmessgerät 13 und Bearbeitungsmaschine 15 ist aber nicht zwingend. Als Übertragungsstrecke 23 kann auch ein Kabel dienen.

Fig. 2 zeigt eine mögliche Anwendung der Erfindung. Wenn beispielsweise auf einem Boden Parkett oder Laminat verlegt werden soll und der Raum einen Eckbereich aufweist, dann wird z.B. gewünscht, dass die im Eckbereich zu verlegenden Bretter 11 eine symmetrische Eckverbindung derart bilden, dass die Gehrung die Winkelhalbierende α/2 des insgesamt einen Winkel α bildenden Eckbereichs ist. Derartige Gehrungsschnitte werden in der Praxis häufig mittels Tischkreissägen ausgeführt. Im vorliegenden Beispiel muss die Tischkreissäge folglich einen Winkelanschlag aufweisen, der auf den Winkel α/2 oder den dazu komplementären Winkel 90° - α/2 eingestellt werden kann.

Alternativ können die beiden Bretter 11 den Winkelbereich auch in einer nicht-symmetrischen Art und Weise bilden. Dies ist in Fig. 1 rein exemplarisch durch einen schraffierten Bereich angedeutet, um den das in Fig. 2 waagerecht verlaufende Brett nach links verlängert ist. Zur Herstellung derartiger Schnitte muss der Winkelanschlag der Tischkreissäge auf einen Winkel α - 90° bzw. 180° - α eingestellt werden.

In dem obigen Beispiel sind alle in Frage kommenden Winkel folglich von dem Eckbereichswinkel α abgeleitet, so dass es genügt, diesen Eckbereichswinkel α zu messen.

Fig. 3 zeigt, wie dieser Winkel α mittels einer so genannten Schmiege 13 gemessen wird. Das Messgerät 13 besitzt zwei gelenkig miteinander verbundene Schenkel, welche an die hier von den Wänden gebildeten Begrenzungen 25, durch welche der Eckbereichswinkel α definiert ist, angelegt werden. Eine Messeinrichtung 14 des Handmessgeräts 13 dient zur Bestimmung des Winkels α zwischen den beiden Schenkeln. Darüber hinaus ist das Handmessgerät 13 zur Messung von Längen ausgebildet. Hierzu sind jeweils an den freien Enden der Schenkel Längenmesseinrichtungen 14 angeordnet. Diese können Längen in Verlängerung des jeweiligen Schenkels messen und sind beispielsweise als Laserentfernungsmesser oder Ultraschallentfernungsmesser ausgebildet. Es ist alternativ z.B. auch möglich, in die Schmiege 13 ausziehbare Maßbänder vorzusehen, deren Ausziehlänge jeweils durch geeignete Mittel detektierbar und in einer Elektronik umsetzbar ist, so dass die gemessene Länge L genauso wie der gemessene Winkel α für eine Übertragung an eine Bearbeitungsmaschine zur Verfügung steht. Bei der gemessenen Länge L handelt es sich in dem dargestellten Beispiel um die Summe aus den beiden Längen 12 und 11, wobei 12 der Abstand zwischen dem freien Ende des betreffenden Schenkels der Schmiege 13 und der gegenüberliegenden Begrenzung 25 und 11 die Schenkellänge ist. Grundsätzlich ist es möglich, den mit der Längenmesseinrichtung 14 gemessenen Entfernungswert mit einem beliebigen Offset zu versehen. Der tatsächlich mittels des Entfernungsmessers 14 gemessene Wert kann z.B. die Länge 12 sein, zu der die - bekannte und konstante - Schenkellänge 11 ("Offset") addiert werden muss, wenn an der Bearbeitungsmaschine die Länge L zwischen Wand 25 und Ecke eingestellt werden muss. Die Länge L ist dann ein von der gemessenen Länge 12 abgeleiteter Messwert und damit gleichwohl ein Messwert im Sinne der Erfindung.

Das Handmessgerät 13 ist des Weiteren mit einer Mehrzahl von Funktionseinheiten 21 versehen. Bei diesen handelt es sich beispielsweise um Tasten, Knöpfe oder Anzeigeeinrichtungen. Mittels der Funktionseinheiten 21 kann der Benutzer beispielsweise einen ermittelten Messwert speichern oder die Übertragung eines Messwertes an die Bearbeitungseinrichtung auslösen. Eine oder mehrere Funktionseinheiten 21 können auch Teil einer Fernsteuerung für die Bearbeitungsmaschine sein, so dass es z.B. möglich ist, mit dem Handmessgerät 13 einen Verstellvorgang einer Einstelleinrichtung der Bearbeitungsmaschine auf der Basis eines zuvor oder gleichzeitig übertragenen Messwertes auszulösen.

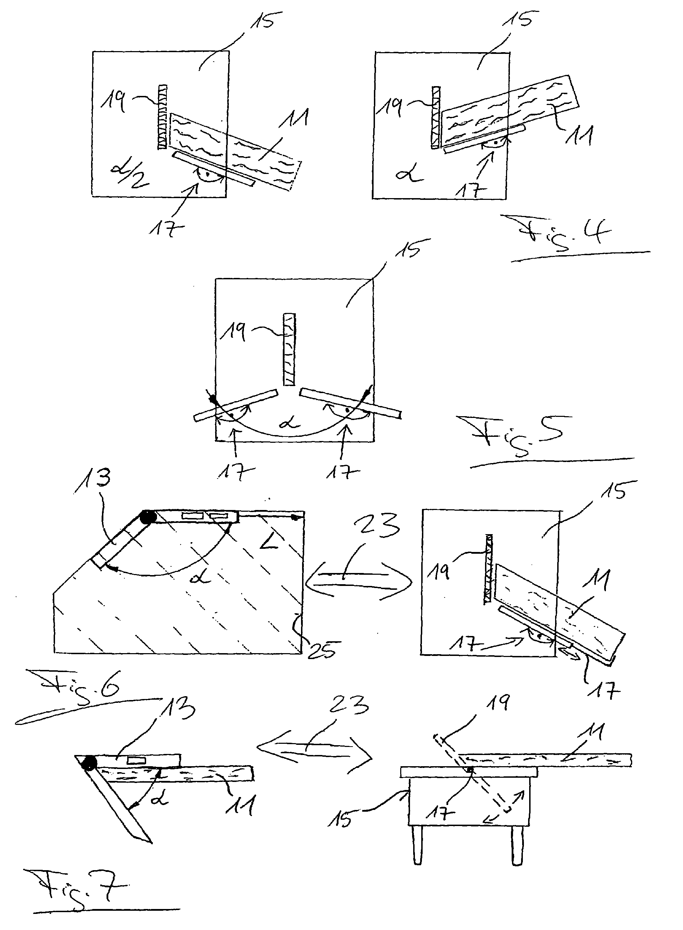

In den Fig. 4 bis 6 ist jeweils eine Bearbeitungsmaschine 15 in Form einer Tischkreissäge schematisch von oben dargestellt. Ein das Werkzeug der Tischkreissäge bildendes Sägeblatt 19 definiert eine Sägeebene, die in den Fig. 4 bis 6 senkrecht auf einer horizontalen Arbeitsfläche der Tischkreissäge 15 steht.

Die Tischkreissäge 15 ist mit einer Einstelleinrichtung 17 für einen Winkelanschlag versehen. Die Winkelstellung des Winkelanschlags 17 bestimmt den Winkel, unter welchem das Werkstück 11 mittels des Sägeblatts 19 zugeschnitten und insbesondere auf Gehrung geschnitten wird. Die beiden Darstellungen in Fig. 4 veranschaulichen, dass auf der Basis eines einzigen gemessenen Winkels α unterschiedliche Einstellungen an der Einstelleinrichtung 17 der Bearbeitungsmaschine 15 möglich sind. So kann der Winkelanschlag 17 beispielsweise auf die Winkelhalbierende α/2 oder auf den gemessenen Winkel α selbst eingestellt werden. Erfindungsgemäß muss die automatische Einstellung der Einstelleinrichtung 17 also nicht in Abhängigkeit von dem unmittelbar gemessenen Wert erfolgen, sondern dies ist auch in Abhängigkeit von einem von dem unmittelbar gemessenen Wert (hier α) abgeleiteten Wert (hier α/2) möglich.

In dem Beispiel gemäß Fig. 5 umfasst eine Tischkreissäge 15 zwei jeweils mit einer Einstelleinrichtung 17 versehene Winkelanschläge. In Abhängigkeit von einem gemessenen Winkel α werden diese Winkelanschläge derart verstellt, dass sie zum einen symmetrisch bezüglich der vom Sägeblatt 19 definierten Sägeebene ausgerichtet sind und zum anderen genau den gemessenen Winkel α einschließen. Die Sägeebene 19 fällt somit mit der Winkelhalbierenden des Winkels α zusammen. Eine derartige Bearbeitungskonfiguration eignet sich folglich zur Herstellung symmetrischer Gehrungsschnitte (vgl. Fig. 2). Die für die Eckverbindung vorgesehenen, auf Gehrung zu schneidenden Bretter 11 können unmittelbar nacheinander zugeschnitten werden, wobei für das eine Brett der eine Winkelanschlag und für das andere Brett der andere Winkelanschlag vorgesehen ist. Zwischen den beiden Zuschneidvorgängen sind keine Einstellvorgänge an den Winkelanschlägen erforderlich.

Die linke Darstellung in Fig. 6 ist eine vereinfachte Darstellung der Fig. 2 und veranschaulicht noch einmal den Einsatz eines Handmessgeräts 13 in Form einer Schmiege, mit dem sowohl ein Winkel α als auch eine Länge L gemessen werden kann. Die entsprechende Tischkreissäge 15 ist mit zwei Einstelleinrichtungen 17 ausgerüstet, nämlich einem Winkelanschlag 17 und einem Längenanschlag 17. Nach Ermittlung der Messwerte mittels der Schmiege 13 und Übertragung der Messwerte von der Schmiege 13 über die Übertragungsstrecke 23 an die Bearbeitungsmaschine 15 werden der gemessene Winkel α bzw. ein daraus abgeleiteter Wert zum Einstellen des Winkelanschlags 17 und die gemessene Länge L bzw. ein daraus abgeleiteter Wert zur Einstellung des Längenanschlags 17 herangezogen. Der Benutzer braucht nur noch das Brett 11 an die korrekt eingestellten Anschläge 17 anzulegen und den Schnitt auszuführen. Sollte für die jeweilige Anwendung der tatsächlich mittels des Handmessgeräts 13 gemessene Winkel α und/oder die tatsächlich mittels des Handmessgeräts 13 gemessene Länge L zu korrigieren sein, z.B. im Sinne eines Aufbringens eines bekannten konstanten Offset, so kann diese Korrektur entweder am Handmessgerät 13 oder an der Bearbeitungsmaschine 15 erfolgen.

Fig. 7 zeigt eine erfindungsgemäße Anwendung, bei der wiederum mittels einer Schmiege 13 ein Winkel α gemessen wird, bei dem es sich um die Schräge einer Kante des Werkstücks 11 handelt. Um entsprechende Schrägschnitte mit einer Tischkreissäge 15 auszuführen, wird das Sägeblatt 19 in der Neigung verstellt, wie es die rechte Darstellung in Fig. 7 zeigt. Für die Neigungsverstellung des Sägeblatts 19 ist eine Einstelleinrichtung 17 vorgesehen. Die Neigungsverstellung erfolgt automatisch in Abhängigkeit von dem mittels der Schmiege 13 ermittelten und über die Übertragungsstrecke 23, beispielsweise per Funk, an die Bearbeitungsmaschine 15 übertragenen Winkel α.

Wenn die Tischkreissäge 15 gleichzeitig mit einem Winkelanschlag gemäß den Ausführungsbeispielen in den Fig. 4 bis 6 versehen ist, dann muss der Tischkreissäge 15 mitgeteilt werden, ob ein mittels der Schmiege 13 ermittelter Winkel α für den Zuschnitt einer Flachseite des Werkstücks oder für die Herstellung eines Kantenschnitts benötigt wird, denn im ersten Fall dient der Winkel α zum Einstellen des Winkelanschlags, während im zweiten Fall eine Neigungsverstellung des Sägeblatts 19 erforderlich ist. Um die jeweils benötigte Einstelleinrichtung 17 auszuwählen, kann das Handmessgerät 13 mit einer Auswahleinrichtung versehen sein, welche beispielsweise den zu übertragenden Messwert zusätzlich in einer Art und Weise codiert, die an der Bearbeitungsmaschine 15 entsprechend ausgewertet werden kann. Alternativ kann vorgesehen sein, dass der Benutzer an der Bearbeitungsmaschine 15 eine Voreinstellung vornimmt, die festlegt, welche der an der Bearbeitungsmaschine 15 vorgesehenen Einstelleinrichtungen 17 auf der Basis der übertragenen Messwerte verstellt werden soll.

### Bezugszeichenliste

- 11: Werkstück
- 13: Handmessgerät
- 14: Messeinrichtung
- 15: Bearbeitungsmaschine
- 17: Einstelleinrichtung
- 19: Werkzeug
- 21: Funktionseinheit
- 23: Übertragungsstrecke
- 25: Begrenzung

## Patentansprüche

1. Bearbeitungssystem zum Bearbeiten von Werkstücken (11),
mit einem Handmessgerät (13) zur Ermittlung von für die Werkstückbearbeitung erforderlichen Messwerten (α, L) zu wenigstens einer Messgröße, und
mit einer Bearbeitungsmaschine (15) für die Werkstücke (11), die eine der Messgröße zugeordnete und entsprechend dem mittels des Handmessgerätes (13) ermittelten Messwert (α, L) verstellbare Einstelleinrichtung (17) umfasst, **dadurch gekennzeichnet, dass**
die Messwerte (α, L) von dem Handmessgerät (13) an die Bearbeitungsmaschine (15) übertragbar sind und die Einstelleinrichtung (17) in Abhängigkeit von den übertragenen Messwerten (α, L) automatisch verstellbar ist.

2. Bearbeitungssystem nach Anspruch 1,
**dadurch gekennzeichnet,**
**dass** die Messgröße ein Winkel ist.

3. Bearbeitungssystem nach Anspruch 1 oder 2,
**dadurch gekennzeichnet,**
**dass** die Bearbeitungsmaschine (15) zur Holzbearbeitung ausgebildet, insbesondere eine Tischkreissäge, ist.

4. Bearbeitungssystem nach einem der vorhergehenden Ansprüche,
**dadurch gekennzeichnet,**
**dass** die Einstelleinrichtung (17) einem Winkelanschlag für ein Werkstück (11) zugeordnet ist.

5. Bearbeitungssystem nach einem der vorhergehenden Ansprüche,
**dadurch gekennzeichnet ,**
**dass** die Einstelleinrichtung (17) einem Längenanschlag für ein Werkstück (11) zugeordnet ist.

6. Bearbeitungssystem nach einem der vorhergehenden Ansprüche, **dadurch gekennzeichnet,**
**dass** die Einstelleinrichtung (17) einer Neigungsverstellung für ein Werkzeug (19) der Bearbeitungsmaschine (15) zugeordnet ist.

7. Bearbeitungssystem nach einem der vorhergehenden Ansprüche,
**dadurch gekennzeichnet,**
**dass** das Handmessgerät (13) zur Ermittlung und Übertragung von Messwerten (α, L) zu wenigstens zwei verschiedenen Messgrößen ausgebildet ist und die Bearbeitungsmaschine (15) zwei verschiedene Einstelleinrichtungen (17) umfasst, die jeweils einer der Messgrößen zugeordnet sind.

8. Bearbeitungssystem nach Anspruch 7,
**dadurch gekennzeichnet,**
**dass** die eine Messgröße ein Winkel und die andere Messgröße eine Länge ist.

9. Bearbeitungssystem nach einem der vorhergehenden Ansprüche,
**dadurch gekennzeichnet,**
**dass** die Bearbeitungsmaschine (15) eine Mehrzahl von der gleichen Messgröße zugeordneten Einstelleinrichtungen (17) umfasst, die in Abhängigkeit von einem übertragenen Messwert (α, L) in eine gemeinsame Bearbeitungskonfiguration verstellbar sind, wobei insbesondere die Bearbeitungskonfiguration eine vorgegebene Relativstellung der Einstelleinrichtungen (17) jeweils zu einem Werkzeug (19) der Bearbeitungsmaschine (15) umfasst.

10. Bearbeitungssystem nach Anspruch 9,
**dadurch gekennzeichnet,**
**dass** die Bearbeitungskonfiguration zur Herstellung von Gehrungsschnitten an zwei für eine Eckverbindung vorgesehenen Werkstücken (11) ausgebildet ist.

11. Bearbeitungssystem nach einem der vorhergehenden Ansprüche,
**dadurch gekennzeichnet,**
**dass** einer Messgröße mehrere Einstelleinrichtungen (17) zugeordnet sind und am Handmessgerät (13) und/oder an der Bearbeitungsmaschine (15) eine Auswahleinrichtung (21) vorgesehen ist, mit der die für einen jeweiligen Messwert (α, L) zu verstellende Einstelleinrichtung (17) auswählbar ist.

12. Bearbeitungssystem nach einem der vorhergehenden Ansprüche,
**dadurch gekennzeichnet,**
**dass** die Messwerte (α, L) jeweils einen unmittelbar mittels des Handmessgeräts (13) gemessenen Wert und/oder wenigstens einen aus dem unmittelbar mittels des Handmessgeräts (13) gemessenen Wert abgeleiteten Wert umfassen.

13. Bearbeitungssystem nach einem der vorhergehenden Ansprüche,
**dadurch gekennzeichnet,**
**dass** die Übertragung der Messwerte (α, L) drahtlos erfolgt, insbesondere über eine Funk- oder Infrarotverbindung (23).

14. Bearbeitungssystem nach einem der vorhergehenden Ansprüche,
**dadurch gekennzeichnet,**
**dass** für die Übertragung der Messwerte (α, L) das Handmessgerät (13) an die Bearbeitungsmaschine (15) anschließbar ist und die Übertragung über eine Schnittstelle zwischen Bearbeitungsmaschine (15) und Handmessgerät (13) erfolgt.

15. Bearbeitungssystem nach einem der vorhergehenden Ansprüche,
**dadurch gekennzeichnet,**
**dass** die Übertragung der Messwerte (α, L) mittels eines separaten, sowohl mit dem Handmessgerät (13) als auch mit der Bearbeitungsmaschine (15) lösbar koppelbaren Speicherelementes erfolgt, wobei das Speicherelement am Handmessgerät (13) mit den Messwerten beschreibbar und die Messwerte an der Bearbeitungsmaschine (15) aus dem Speicherelement auslesbar sind.

## Claims

1. A processing system for processing workpieces (11),
having a manual measuring device (13) for determining measured values (α, L) relating to at least one measurement parameter required for the workpiece processing; and
having a processing machine (15) for the workpieces (11) which includes an adjustment device (17) associated with the measurement parameter and adjustable in accordance with the measured value (α, L) determined by means of the manual measuring device (13),
**characterized in that**
the measured values (α, L) can be transferred from the manual measuring device (13) to the processing machine (15) and the setting device (17) is automatically adjustable in dependence on the transferred measured values (α, L).

2. A processing system in accordance with claim 1,
**characterised in that**
the measurement parameter is an angle.

3. A processing system in accordance with claim 1 or claim 2,
**characterised in that**
the processing machine (15) is designed for wood processing, is in particular a mitre saw.

4. A processing system in accordance with any one of the preceding claims,
**characterised in that**
the setting device (17) is associated with an angular stop for a workpiece (11).

5. A processing system in accordance with any one of the preceding claims,
**characterised in that**
the setting device (17) is associated with a longitudinal stop for a workpiece (11).

6. A processing system in accordance with any one of the preceding claims,
**characterised in that**
the setting device (17) is associated with an inclination adjustment for a tool (19) of the processing machine (15).

7. A processing system in accordance with any one of the preceding claims,
**characterised in that**
the manual measuring device (13) is designed for determining and transferring measured values (α, L_) relating to at least two different measurement parameters and the processing machine (15) includes two different setting devices (17) which are each associated with one of the measurement parameters.

8. A processing system in accordance with claim 7,
**characterised in that**
the one measurement parameter is an angle and the other measurement parameter is a length.

9. A processing system in accordance with any one of the preceding claims,
**characterised in that**
the processing machine (15) includes a plurality of setting devices (17) which are associated with the same measurement parameter and which are adjustable in dependence on a transferred measured value (α, L) into a common processing configuration, with in particular the processing configuration including a predefined relative position of the setting devices (17) in each case to a tool (19) of the processing machine (15).

10. A processing system in accordance with claim 9,
**characterised in that**
the processing configuration is designed for manufacturing mitre cuts at two tools (11) provided for a corner connection.

11. A processing system in accordance with any one of the preceding claims,
**characterised in that**
a plurality of setting devices (17) are associated with a measurement parameter and a section device (21) is provided at the manual measuring device (13) and/or at the processing machine (15) and the setting device (17) to be adjusted for a respective measured value (α, L) can be selected using said selection device.

12. A processing system in accordance with any one of the preceding claims,
**characterised in that**
the measured values (α, L) each include a value measured directly by means of the manual measuring device (13) and/or at least one value derived from the value measured directly by mans of the manual measurement device (13).

13. A processing system in accordance with any one of the preceding claims,
**characterised in that**
the transfer of the measured values (α, L) takes place wirelessly, in particular via a radio or infrared connection (23).

14. A processing system in accordance with any one of the preceding claims,
**characterised in that**
the manual measuring device (13) can be connected to the processing machine (15) for the transfer of the measured values (α, L) and the transfer takes place via an interface between the processing machine (15) and the manual measuring device (13).

15. A processing system in accordance with any one of the preceding claims,
**characterised in that**
the transfer of the measured values (α, L) takes place by means of a separate memory element releasably couplable both to the manual measuring device (13) and to the processing machine (15), with the memory element at the manual measuring device (13) being writable with the measured values and the measured values at the processing machine (15) being able to be read out of the memory element.

## Revendications

1. Système d'usinage pour usiner des pièces à oeuvrer (11), comprenant un appareil de mesure manuel (13) pour déterminer des valeurs de mesure (α, L) nécessaires pour l'usinage des pièces à oeuvrer, en relation avec au moins une grandeur de mesure, et comprenant une machine d'usinage (15) pour les pièces à oeuvrer (11), qui comprend un système de réglage (17) associé à la grandeur de mesure et déplaçable en correspondance de la valeur de mesure (α, L) déterminée au moyen de l'appareil de mesure manuelle (13),
**caractérisé en ce que**
les valeurs de mesure (α, L) sont transmissibles depuis l'appareil de mesure manuel (13) vers la machine d'usinage (15), et le système de réglage (17) est automatiquement déplaçable en fonction des valeurs de mesures transmises (a, L).

2. Système d'usinage selon la revendication 1,
**caractérisé en ce que** la grandeur de mesure est un angle.

3. Système d'usinage selon la revendication 1 ou 2,
**caractérisé en ce que** la machine d'usinage (15) est réalisée pour l'usinage du bois, en particulier une scie circulaire sur table.

4. Système d'usinage selon l'une des revendications précédentes,
**caractérisé en ce que** le système de réglage (17) est associé à une butée angulaire pour une pièce à oeuvrer (11).

5. Système d'usinage selon l'une des revendications précédentes,
**caractérisé en ce que** le système de réglage (17) est associé à une butée en longueur pour une pièce à oeuvrer (11).

6. Système d'usinage selon l'une des revendications précédentes,
**caractérisé en ce que** le système de réglage (17) est associé à un réglage d'inclinaison pour un outil (19) de la machine d'usinage (15).

7. Système d'usinage selon l'une des revendications précédentes,
**caractérisé en ce que** l'appareil de mesure manuel (13) est réalisé pour déterminer et transmettre des valeurs de mesure (α, L) relatives à au moins deux grandeurs de mesures différentes, et la machine d'usinage (15) comprend deux systèmes de réglage différents (17) qui sont chacun associés à l'une des grandeurs de mesure.

8. Système d'usinage selon la revendication 7,
**caractérisé en ce que** l'une des grandeurs de mesure est un angle et l'autre grandeur de mesure est une longueur.

9. Système d'usinage selon l'une des revendications précédentes,
**caractérisé en ce que** la machine d'usinage (15) comprend une pluralité de systèmes de réglage (17) associés à la même grandeur de mesure, qui sont déplaçables, en fonction d'une valeur de mesure transmise (α, L) pour venir dans une configuration d'usinage commune, et la configuration d'usinage inclut en particulier une position relative prédéterminée des systèmes de réglage (17) respectivement par rapport à un outil (19) de la machine d'usinage (15).

10. Système d'usinage selon la revendication 9,
**caractérisé en ce que** la configuration d'usinage est réalisée pour la production de coupes en onglet sur deux pièces à oeuvrer (11) prévues pour une liaison en coin.

11. Système d'usinage selon l'une des revendications précédentes,
**caractérisé en ce que** plusieurs systèmes de réglage (17) sont associés à une grandeur de mesure, et **en ce qu'**il est prévu un système de sélection (21) sur l'appareil de mesure manuel (13) et/ou sur la machine d'usinage (15), au moyen duquel il est possible de sélectionner le système de réglage (17) à déplacer pour une valeur de mesure respective (α, L).

12. Système d'usinage selon l'une des revendications précédentes,
**caractérisé en ce que** les valeurs de mesure (α, L) incluent respectivement une valeur mesurée directement au moyen de l'appareil de mesure manuel (13) et/ou au moins une valeur dérivée de la valeur mesurée directement au moyen de l'appareil de mesure manuel (13).

13. Système d'usinage selon l'une des revendications précédentes,
**caractérisé en ce que** la transmission des valeurs de mesure (α, L) a lieu sans fil, en particulier via une liaison radio ou une liaison à infrarouge (23).

14. Système d'usinage selon l'une des revendications précédentes,
**caractérisé en ce que**, pour la transmission des valeurs de mesure (α, L), l'appareil de mesure manuel (13) peut être branché sur la machine d'usinage (15) et la transmission a lieu via une interface entre la machine d'usinage (15) et l'appareil de mesure manuel (13).

15. Système d'usinage selon l'une des revendications précédentes,
**caractérisé en ce que** la transmission des valeurs de mesure (α, L) a lieu au moyen d'un élément à mémoire séparé, susceptible d'être couplé de façon détachable aussi bien à l'appareil de mesure manuel (13) qu'à la machine d'usinage (15), ledit élément à mémoire étant inscriptible au niveau de l'appareil de mesure manuel (13) avec les valeurs de mesure, et les valeurs de mesure étant lisibles hors de l'élément à mémoire au niveau de la machine d'usinage (15).
